# EUROPÄISCHE PATENTSCHRIFT

(11) **EP 2 003 348 B1**
(45) Veröffentlichungstag und Bekanntmachung des Hinweises auf die Patenterteilung: **28.03.2012**
(21) Anmeldenummer: 08009690.2
(22) Anmeldetag: 28.05.2008
(51) Int. Cl.: F16B 25/00, F16B 33/06

(54) **Schraube und ihre Verwendung**
Screw and its utilisation
Vis et son utilisation

(30) Priorität: 15.06.2007 DE 102007029255
(43) Veröffentlichungstag der Anmeldung: 17.12.2008
(73) Patentinhaber: Adolf Würth GmbH & Co. KG, 74653 Künzelsau (DE); Würth International AG, 7000 Chur (CH)
(72) Erfinder: Wunderlich, Andreas, 74653 Kupferzell (DE)
(74) Vertreter: Patentanwälte Ruff, Wilhelm, Beier, Dauster & Partner

(56) Entgegenhaltungen:
- WO-A1-94/25764
- DE-A1- 10 013 810
- JP-A- 2002 323 021
- "Hot-dip galvanized coatings on threaded fasteners (ISO metric coarse thread series)", 7 March 1983 (1983-03-07), AUSTRALIAN STANDARD, STANDARDS AUSTRALIA, AU, PAGE(S) 1 - 6, XP007917962, ISBN: 978-0-7262-2825-4

## Beschreibung

Die Erfindung betrifft eine Schraube zum Verstärken von Holzkonstruktionen, die Verwendung einer solchen Schraube und eine mit einer solchen Schraube verstärkte Holzkonstruktion.

Es ist bekannt, dass man Holzkonstruktionen, beispielsweise Träger, die auf Querzug beansprucht sind, durch das Einkleben von Stäben oder Gewindebolzen verstärken kann. Um diese Stahlstäbe oder Gewindebolzen einzubringen, werden Bohrungen mit dem Außendurchmesser der Stäbe durch die Träger ausgeführt (Bauen mit Holz 4/99, Seite 44). Diese Stahlstäbe oder Gewindebolzen werden mit geeigneten Klebern eingeklebt. Bei Verstärkungen von gekrümmten Trägern und Satteldachträgern müssen die Stahlstäbe über die gesamte Trägerhöhe durchgehen, um eine Aufspaltung des Holzes am Ende der Verstärkungselemente zu verhindern.

Es ist ebenfalls bekannt, als Verstärkungselemente Schrauben zu verwenden, die mindestens in ihren Endbereichen mit jeweils einem Gewinde versehen sind (DE 10013810). Diese Schrauben werden so weit eingeschraubt, dass sie den am stärksten auf Querzug beanspruchten Teil überbrücken, wobei die Schrauben deutlich kürzer sind als die Dicke des Trägers. Die Schrauben werden ohne Vorbohren eingeschraubt. Über den gefährdeten Bereich werden dabei mehrere Schrauben eingeschraubt.

Außerdem ist es bekannt, unvergütete, galvanisch beschichtete Schrauben nach einem Vorbohren einzuschrauben. Solche Schrauben gibt es bis zu einer Länge von über 2 m.

Das Vorbohren über einen solchen Durchmesser ist aufwändig, und die Kosten für Bohrer dieser Länge sind beachtlich hoch.

Der Erfindung liegt die Aufgabe zu Grunde, eine für den Anwender einfach durchzuführende Möglichkeit zur Verstärkung von auf Querzug belasteten Holzkonstruktionen zu schaffen.

Zur Lösung dieser Aufgabe schlägt die Erfindung eine Schraube mit den im Anspruch 1 genannten Merkmalen vor. Weiterbildungen der Erfindung sind Gegenstand der abhängigen Patentansprüche.

Anstelle von unvergüteten verwendet die Erfindung also jetzt vergütete Schrauben, die anstelle einer galvanischen Verzinkung eine Feuerverzinkung aufweisen. Bei einer galvanischen Verzinkung ist die Zinkschicht etwa 2 bis 25 µm dick, während bei der Feuerverzinkung an der Grenze zwischen dem Stahl und dem Zink eine Legierung der beiden Materialien entsteht, die zu einer Schichtdicke von 30 bis 200 µm führt. Von der Feuerverzinkung ist bereits bekannt, dass sie zu einer Verringerung der Bruchfestigkeit der Schraube führt. Es hat sich überraschenderweise herausgestellt, dass bei der Kombination aus Feuerverzinkung und Gleitbeschichtung zwar die erwartete Verringerung der Bruchfestigkeit eintritt, sich gleichzeitig aber auch eine Verringerung des Einschraubmoments gegenüber der Kombination aus galvanischer Beschichtung und Gleitbeschichtung ergibt. Die Verringerung des Einschraubmoments ist dabei größer als die Verringerung der Bruchfestigkeit.

Die Schraube kann in Weiterbildung der Erfindung an ihrem Antriebsende einen Innenantrieb aufweisen, mit dem sie in die Holzkonstruktionen eingeschraubt werden kann.

Es ist aber ebenfalls möglich und liegt im Rahmen der Erfindung, dass die Schraube einen üblichen Sechskantkopf aufweisen kann, der gleichzeitig eine Begrenzung der Einschraubbewegung darstellt.

Erfindungsgemäß kann die Schraube eine Länge aufweisen, die der Dicke des Trägers entspricht. Es hat sich gezeigt, dass es schwierig ist, Schrauben einer solchen Länge ohne Vorbohren einzuschrauben, da man leicht mit solchen Schrauben schräg ansetzen kann. Aus diesem Grunde verwendet der Stand der Technik ein vollständiges Vorbohren. Bei der Schraube nach der Erfindung ist es aber möglich, mit einem kurzen Vorbohren auszukommen, um nur die Schraube während des Beginns des Einschraubens zu führen. Die Schraube kann dann ohne weiteres Vorbohren eingeschraubt werden. Dies wird durch die Verwendung des vergüteten Materials und durch die Verringerung des Einschraubdrehmoments erreicht.

Die Erfindung schlägt ebenfalls die Verwendung einer Schraube, wie sie hierin beschrieben wurde, zur Verstärkung von Holzkonstruktionen mit auf Querzug beanspruchten Bereichen vor. Die Schraube wird durch den auf Querzug beanspruchten Bereich hindurch geschraubt, vorzugsweise in einer Weise, dass sie den Träger vollständig durchsetzt.

Insbesondere kann in Weiterbildung vorgesehen sein, dass vor dem Einschrauben der Schraube eine Vorbohrung eingebracht wird, die sich über einen nur geringen Teil der Länge der Schraube erstreckt, beispielsweise über maximal 10 cm. Durch diese Vorbohrung soll nur das Führen der Schraube während des Beginns der Einschraubbewegung gewährleistet werden.

Die Erfindung schlägt ebenfalls eine Holzkonstruktion, insbesondere einen Träger mit Querzugbelastung vor, der eine durch den Bereich der Querzugbelastung hindurchgehende Schraube mit einem oder mehreren der hierin beschriebenen Merkmale aufweist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht einer Schraube nach der Erfindung;
- Figur 2: die Seitenansicht des Antriebsendes der Schraube;
- Figur 3: in vergrößertem Maßstab eine Teilansicht der Schraube;
- Figur 4: eine Holzkonstruktion mit eingesetzten Schrauben;
- Figur 5: ein Beispiel für einen Holzträger mit einem auf Querzug belasteten Bereich.

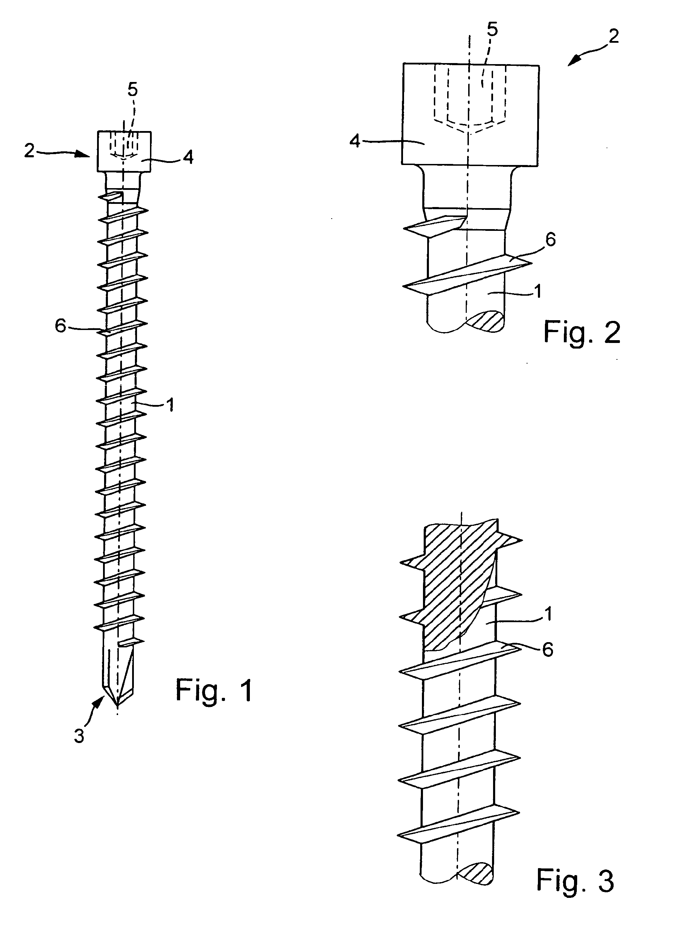

Die in Figur 1 dargestellte Schraube nach der Erfindung enthält einen Schraubenschaft 1, der an seinem einen Ende mit einem Schraubenantrieb 2 versehen ist, während das gegenüberliegende Ende ein vorderes Ende 3 ist. An dem Schraubenantriebsende enthält die Schraube einen Schraubenkopf 4, im dargestellten Beispiel mit einem Innenantrieb 5, der nur angedeutet ist. Über die gesamte Länge des Schafts 1 erstreckt sich ein Gewinde 6, bei dem es sich um ein Spanplattengewinde handelt.

Figur 2 zeigt in vergrößertem Maßstab das Schraubenantriebsende 2 mit dem Schraubenkopf 4 und der Antriebsvertiefung 5. Man kann der Figur 2 entnehmen, dass der Schraubenkopf 4 am Ende des Schraubenschafts 1 angeformt ist, sich aber nur etwas über den Durchmesser des Schraubenschafts 1 radial nach außen erstreckt. Das Spanplattengewinde 6 führt bis fast zur Unterseite des Schraubenkopfs 4.

In Figur 3 sind die Flanken des Spanplattengewindes 6 in größerem Maßstab eingezeichnet. Das obere Ende des in Figur 3 dargestellten Ausschnitts stellt einen Schnitt durch die Schraube dar.

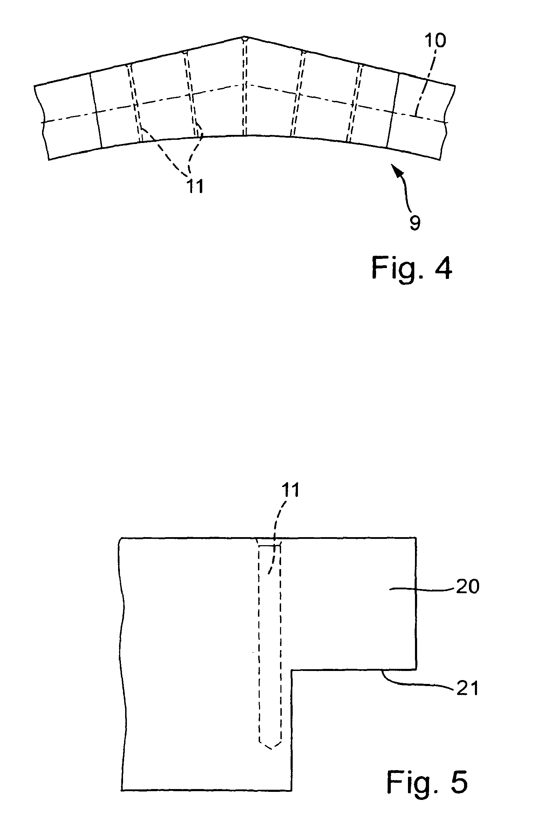

Figur 4 zeigt ein typisches Beispiel für eine Holzkonstruktion, bei der eine Schraube nach der Erfindung angewendet werden kann. Es handelt sich um einen Träger 9 für ein Dach, wobei der Träger 9 aus Holz besteht. Der Träger 9 weist eine Trägerachse 10 auf, die etwa mittig durch den Träger 9 verläuft. In diesem Bereich ist der Träger 9 auf Querzug belastet. Quer zu dieser Trägerachse 10 ist die Holzkonstruktion mit einer Reihe von Schrauben 11 nach der Erfindung versehen, die hier nur angedeutet sind. Bei einem solchen Träger 9, der zum Tragen eines Dachs dient, lassen sich die Schrauben nach der Erfindung auch von unten her einbringen, so dass das Verstärken der Holzkonstruktion auch nachträglich ohne das Abdecken des Dachs möglich ist. Um die Schrauben erfindungsgemäß einbringen zu können, wird mit einem Bohrer eine kurze Vorbohrung von unten her eingebracht, beispielsweise in einer Tiefe von 10 cm. Anschließend kann die Schraube dort eingesteckt werden, wobei diese kurze Vorbohrung dazu dient, die Schraube zu führen. Anschließend kann die Schraube mit einem handelsüblichen Antrieb eingeschraubt werden. Wenn die Schraube einen deutlich radial vorstehenden Schraubenkopf aufweist, kann dieser zur Anlage an der Unterseite des Trägers 9 dienen.

Figur 5 zeigt einen weiteren möglichen Anwendungsfall, bei dem ein Träger 20 in seinem Endbereich eine untere Stufe 21 aufweist. Die untere Fläche 21 des vorspringenden Teils des Trägers 20 soll auf einer Unterkonstruktion, beispielsweise einem quer zur Zeichnungsebene verlaufenden Träger aufliegen. Dadurch entsteht an der Stelle, wo sich die Höhe des Trägers verringert, eine auf Querzug beanspruchte Stelle. Hier kann nun ebenfalls eine Schraube 11 nach der Erfindung eingebracht werden, die in diesem Fall beispielsweise von oben her in den Träger 20 eingeschraubt wird.

## Patentansprüche

1. Schraube zum Verstärken und Verbinden von Holzkonstruktionen, mit
1.1 einem Schraubenschaft (1), der
1.2 ein Antriebsende (2),
1.3 ein vorderes Ende (3) und
1.4 ein sich über die gesamte Länge des Schraubenschafts (1) erstre- ckendes Spanplattengewinde (6) aufweist, wobei
1.5 der Schraubenschaft (1) vergütet,
1.6 feuerverzinkt und
1.7 auf der Feuerverzinkung gleitbeschichtet ist.

2. Schraube nach Anspruch 1, bei der das Antriebsende (2) einen Innenantrieb (5) aufweist.

3. Schraube nach Anspruch 1 oder 2, bei der das Antriebsende (2) der Schraube einen Sechskantkopf aufweist.

4. Verwendung einer Schraube nach einem der vorhergehenden Ansprüche zum Verstärken von Holzkonstruktionen (10, 20) mit Querzugbelastung.

5. Verwendung nach Anspruch 4, bei der vor dem Einschrauben der Schraube eine Vorbohrung in einer Tiefe von etwa 10 cm durchgeführt wird.

6. Verwendung nach Anspruch 4 oder 5, bei der die Schraube über die gesamte Dicke der Holzkonstruktion (10, 20) eingeschraubt wird.

7. Holzkonstruktion, insbesondere Träger (10, 20) mit Querzugbelastung, mit einer durch den Bereich der Querzugbelastung hindurchgeschraubten Schraube nach einem der Ansprüche 1 bis 3.

## Claims

1. A screw for reinforcing and binding wood structures, with
1.1 a screw shaft (1), which exhibits
1.2 a driving end (2),
1.3 a front end (3) and
1.4 a clamping plate thread (6) extending over the entire length of the screw shaft (1), wherein
1.5 the screw shaft (1) is hardened and tempered,
1.6 galvanized and
1.7 provided with an anti-friction coating after galvanized.

2. The screw according to claim 1, in which the driving end (2) exhibits an inner drive (5).

3. The screw according to claim 1 or 2, in which the driving end (2) of the screw exhibits a hexagonal head.

4. Use of a screw according to one of the preceding claims for strengthening wood structures (10, 20) exposed to a transverse tensile load.

5. Use according to claim 4, in which a pre-borehole is drilled to a depth of about 10 cm before the screw is screwed in.

6. Use according to claim 4 or 5, in which the screw is screwed in over the entire thickness of the wood structure (10, 20).

7. A wood structure, in particular a carrier (10, 20) exposed to a transverse tensile load, with a screw according to one of claims 1 to 3 screwed through the area of the transverse tensile load.

## Revendications

1. Vis pour consolider et relier des constructions en bois, avec
1.1 une tige de vis (1), qui comporte
1.2 une extrémité d'entraînement (2),
1.3 une extrémité antérieure (3) et
1.4 un filetage pour panneau de particule (6) s'étendant sur toute la longueur de la tige de vis (1),
1.5 la tige de vis (1) étant trempée et revenue,
1.6 galvanisée à chaud et
1.7 étant munie d'un revêtement glissant sur la galvanisation à chaud.

2. Vis selon la revendication 1, sur laquelle l'extrémité d'entraînement (2) comporte un entraînement intérieur (5).

3. Vis selon la revendication 1 ou 2, sur laquelle l'extrémité d'entraînement (2) de la vis comporte une tête hexagonale.

4. Utilisation d'une vis selon l'une quelconque des revendications précédentes pour renforcer des constructions en bois (10, 20) avec une contrainte par traction transversale.

5. Utilisation selon la revendication 4, pour laquelle, avant le vissage de la vis, on réalise un avant-trou d'une profondeur d'environ 10 cm.

6. Utilisation selon la revendication 4 ou 5, pour laquelle on visse la vis sur toute l'épaisseur de la construction en bois (10, 20).

7. Construction en bois, notamment support (10, 20) avec une contrainte par traction transversale, avec une vis selon l'une quelconque des revendications 1 à 3 vissée à travers la zone de la contrainte par traction transversale.
